# EUROPÄISCHE PATENTANMELDUNG

(11) **EP 4 434 777 A1**
(43) Veröffentlichungstag der Anmeldung: **25.09.2024**
(21) Anmeldenummer: 24154780.1
(22) Anmeldetag: 30.01.2024
(51) Int. Cl.: B60G 3/20, B60G 7/00, F16C 11/06

(54) **RADAUFHÄNGUNG FÜR EIN RAD EINER ACHSE EINES KRAFTFAHRZEUGS SOWIE KRAFTFAHRZEUG**

(30) Priorität: 21.03.2023 DE 102023107011
(71) Anmelder: AUDI AG, 85057 Ingolstadt (DE)
(72) Erfinder: Mohrlock, Dominik, 85114 Buxheim (DE)

(57) **Zusammenfassung**

Die Erfindung betriff eine Radaufhängung (10) für ein Rad (12) einer Achse eines Kraftfahrzeugs, umfassend ein das Rad (12) tragendes Schwenklager (14), das in einer oberen Lenkerebene über zumindest einen Lenker (16) am Kraftfahrzeugaufbau angelenkt ist, wobei das Schwenklager (14) einen Schwenklagerarm (14-1) umfasst, an dem der Lenker (16) mittels eines einen Kugelzapfen (18-1) aufweisenden Kugelgelenks (18) gelagert ist, wobei der Kugelzapfen (18-1) in Fahrzeughochrichtung (z) verlaufend ausgerichtet ist und die Kugel (18-2) des Kugelzapfens (18-1) in einer lenkerseitigen Aufnahme und der Schaft (18-3) des Kugelzapfens (18-1) in einer schwenklagerarmseitigen Aufnahme aufgenommen ist, wobei die schwenklagerarmseitige Aufnahme als eine längsgeschlitzte Klemmbohrung ausgebildet ist, in der der Schaft (18-3) des Kugelzapfens (18-1) mittels einer orthogonal zur Längsachse (L) der Klemmbohrung ausgerichteten Klemmschraube (20) verklemmt gehalten ist. Die Erfindung zeichnet sich dadurch aus, dass die Klemmbohrung in Fahrzeugquerrichtung (y) nach innen zur Fahrzeugmitte hin geneigt verlaufend angeordnet ist, sodass der in der Klemmbohrung aufgenommene Kugelzapfen (18-1) - ausgehend von der Vertikalrichtung (V) - um einen spitzen Winkel (β) nach innen geneigt vorlaufend ausgerichtet ist.

## Beschreibung

Die Erfindung betrifft eine Radaufhängung für ein Rad einer Achse eines Kraftfahrzeugs gemäß der im Oberbegriff des Patentanspruches 1 angegebenen Art sowie ein Kraftfahrzeug gemäß Patentanspruch 10.

Bei Kraftfahrzeugen mit Verbrennungsmotor wird die Höhe der Motorhaube bzw. der Höhenverlauf der Motorhaube insbesondere durch den Verbrennungsmotor festgelegt. D.h., die Radaufhängung, die eine ähnliche Höhe wie der Verbrennungsmotor aufweist, ist bei Kraftfahrzeugen mit Verbrennungsmotor in der Regel nicht höhenbestimmend für den Verlauf der Motorhaube. Im Zuge der Umstellung der Kraftfahrzeuge auf Elektroantrieb wird - aufgrund der höheren Gewichte der Elektrofahrzeuge und der durch die im Fahrzeugboden verbauten Batterien bedingten größeren Fahrzeughöhen von Elektrofahrzeugen - zunehmend die Radaufhängung höhenbestimmend für den Verlauf der Motorhaube werden.

Eine gattungsgemäße Radaufhängung für ein Rad einer Achse eines Kraftfahrzeugs, gemäß der ein das Rad tragendes Schwenklager einen Schwenklagerarm umfasst, an dem die Lenker der oberen Lenkerebene jeweils mittels eines Kugelgelenks gelagert sind, und gemäß der die Kugelzapfen der Kugelgelenke jeweils in Fahrzeughochrichtung, z-Richtung, verlaufend ausgerichtet und die Schäfte der Kugelzapfen schwenklagerarmseitig jeweils in einer längsgeschlitzten Klemmbohrung aufgenommen und mittels einer orthogonal zur Längsachse der Klemmbohrung ausgerichteten Klemmschraube verklemmt gehalten sind, ist der Offenbarung der DE 10 2015 014 027 A1, vgl. Fig. 1, [0005], zu entnehmen.

Der Erfindung liegt die Aufgabe zugrunde eine Radaufhängung gemäß der im Oberbegriff des Patentanspruches 1 angegebenen Art derart weiterzubilden, dass die Radaufhängung weniger hoch baut.

Diese Aufgabe wird durch die kennzeichnenden Merkmale des Patentanspruches 1 in Verbindung mit seinen Oberbegriffsmerkmalen gelöst.

Die Unteransprüche 2 bis 9 stellen vorteilhafte Weiterbildungen der Radaufhängung dar.

In bekannter Art und Weise umfasst die Radaufhängung für ein Rad einer Achse eines Kraftfahrzeugs ein das Rad tragendes Schwenklager, das in einer oberen Lenkerebene über zumindest einen Lenker am Kraftfahrzeugaufbau angelenkt ist, wobei das Schwenklager einen Schwenklagerarm umfasst, an dem der Lenker mittels eines einen Kugelzapfen aufweisenden Kugelgelenks gelagert ist. Der in Fahrzeughochrichtung z verlaufend ausgerichtete Kugelzapfen des Kugelgelenks umfasst in bekannter Art und Weise eine in einer lenkerseitigen Aufnahme gelagerte Kugel sowie einen in einer schwenklagerarmseitigen Aufnahme aufgenommen Schaft, wobei die schwenklagerarmseitige Aufnahme als eine längsgeschlitzte Klemmbohrung ausgebildet ist, in der der Schaft des Kugelzapfens mittels einer orthogonal zur Längsachse L der Klemmbohrung und orthogonal zum Längsschlitz der Klemmbohrung ausgerichteten Klemmschraube verklemmt gehalten ist.

Lediglich der Vollständigkeit halber noch darauf hingewiesen, dass die oben und im folgenden verwendeten Richtungsangaben sich auf ein fahrzeugfestes Koordinatensystem beziehen, dessen x-Achse entlang der Fahrzeuglängsachse verläuft und in Fahrtrichtung ( = Vorwärtsfahrtrichtung) zeigt, dessen y-Achse entlang der Fahrzeugquerachse verläuft und - entsprechend - nach links zeigt und dessen z-Achse entlang der Fahrzeughochachse nach oben ausgerichtet ist.

Erfindungsgemäß ist die Klemmbohrung in Fahrzeugquerrichtung y nach innen zur Fahrzeugmitte hin geneigt verlaufend angeordnet ist, sodass der in der Klemmbohrung aufgenommene Kugelzapfen - ausgehend von der Vertikalrichtung - um einen spitzen Winkel β nach innen geneigt vorlaufend ausgerichtet ist. Mit anderen Worten, der in z-Richtung betrachtet obere Teil der des Kugelzapfens, also die Kugel, ist ausgehend von der Vertikalen nach innen zur Fahrzeugmitte hin und entsprechend ist das der Kugel abgewandte Ende des Kugelzapfens ausgehend von der Vertikalen nach außen zum Rad hin liegend angeordnet.

Die erfindungsgemäße Ausgestaltung hat den Effekt, dass - da die Kugel des Kugelzapfens neben einer Verschiebung in Fahrzeugquerrichtung y nach innen auch eine Auslenkung in Fahrzeughochrichtung z nach unten erfährt - dass sich die Achshöhe reduziert und damit die Radaufhängung weniger hoch baut. Ein weiterer Effekt der erfindungsgemäßen Ausgestaltung ist, dass die in der lenkerseitigen Aufnahme aufgenommene Kugel des Kugelzapfens beim vollen Einfedern weniger in z-Richtung nach oben ausgelenkt wird. Somit kann in vorteilhafter Weise der Durchtritt im Federbeindom kleiner ausgeführt werden, was sich wiederum vorteilhaft auf die Festigkeit auswirkt.

Bevorzugt ist dabei die Klemmbohrung so verlaufend angeordnet ist, dass für den spitzen Winkel β gilt: 10°≤ Winkel β ≤ 20°. Der angegebenen Winkelbereich, nämlich 10°≤ Winkel β ≤ 20°, erweist sich dabei als besonders vorteilhaft, da bei guter Kinematik bereits eine ausreichende Absenkung der Achshöhe sichergestellt ist.

Eine besonders bevorzugte Ausführungsform der Erfindung sieht vor, dass der Schwenklagerarm in Fahrzeughochrichtung z betrachtet sich nach oben über das Rad erstreckend und - in Konstruktionslage des Kraftfahrzeugs - in Fahrzeugquerrichtung y betrachtet sich bis an die Lauffläche des Rades erstreckend bzw. bereichsweise bis die Lauffläche des Rades hineinerstreckend ausgebildet ist und dass das Kugelgelenk oberhalb des Rades liegend angeordnet ist und so positioniert und ausgebildet ist, dass in Konstruktionslage des Kraftfahrzeugs die Kugel des Kugelzapfens - wenn in Projektion auf die Fahrbahn betrachtet - außerhalb der Lauffläche des Rades liegt.

Unter Konstruktionslage des Kraftfahrzeugs ist vorliegend der Zustand des Kraftfahrzeugs im Stand, d.h. die Räder befinden sich in einem definierten, durch das Normalgewicht bedingten leicht eingefederten Zustand, zu verstehen.

Vorteilhaft an dieser Ausgestaltung ist, dass, da in Konstruktionslage die Kugel des Kugelzapfens - wenn in Projektion auf die Fahrbahn betrachtet - außerhalb der Lauffläche des Rades liegt, der für einen Freigang notwendiger Abstand zwischen Schwenklagerarm und Radkasten geringer dimensioniert werden kann, was sich wiederum positiv Höhenverlauf der Motorhaube auswirkt.

Vorzugsweise ist dabei der Schwenklagerarm schwanenhalsförmig ausgebildet. Vorteilhaft an dieser Ausgestaltung ist, dass die in Fahrzeugquerrichtung y nach innen zur Fahrzeugmitte hin geneigt verlaufende Ausrichtung der Klemmbohrung - infolge der Krümmung - eine vergrößerte Verschiebung der Kugel des Kugelzapfens z-Richtung nach unten ermöglicht, wodurch wiederum Bauraumhöhe eingespart wird.

Eine weitere Ausführungsform sieht vor, dass der Schaft des Kugelzapfens eine umlaufende Nut aufweist und dass die die Klemmschraube aufnehmende Klemmschraubenbohrung derart tangential zur Klemmbohrung verlaufenden ausgerichtet ist, dass die Klemmschraube bereichsweise in die am Schaft des Kugelzapfens ausgebildete Nut hineinrecht. Vorteilhaft an dieser Ausgestaltung ist, dass aufgrund des Formschlusses nunmehr der Kugelzapfen verliersicher in der Klemmbohrung gehalten ist.

Da ein Federbein einer Radaufhängung bekanntlich beträchtlich zur Höhe der Radaufhängung beiträgt, sieht - zur einer zusätzlichen Reduzierung der Bauhöhe der Radaufhängung - eine weitere vorteilhafte Weiterbildung der erfindungsgemäßen Radaufhängung vor, das Federbein in Bezug zur Drehachse des Rades windschief anzuordnen.

Eine besonders kompakte Ausführungsform der erfindungsgemäßen Radaufhängung zeichnet sich dadurch aus, dass das Schwenklager in der oberen Lenkerebene über einen einzigen, als Dreieckslenker ausgebildeten Lenker am Kraftfahrzeugaufbau angelenkt.

Eine alternative Ausführungsform sieht vor, dass das Schwenklager über zwei stabförmige Querlenker am Kraftfahrzeugaufbau angelenkt ist, die jeweils über ein Kugelgelenk am Schwenklagerarm gelagert sind. D.h., die Kugeln der beiden Kugelzapfen sind jeweils in entsprechenden lenkerseitigen Aufnahmen und die Schäfte der Kugelzapfen in entsprechenden schwenklagerarmseitigen Klemmbohrungen aufgenommen. Die Befestigung bzw. Verklemmung der Schäfte in den schwenklagerarm seitigen Bohrungen erfolgt dabei bevorzugt mittels zweier Klemmschrauben, die fluchtend zueinander und orthogonal zur Längsachse der Kugelzapfen ausgerichtet sind.

Zur Verringerung der Losteile sieht eine alternative Ausgestaltung vor, dass die beiden Schäfte über eine gemeinsame, orthogonal zur Längsachse der Schäfte ausgerichtete Klemmschraube verklemmt in den schwenklagerarmseitigen Klemmbohrungen gehalten sind.

Der Erfindung liegt des Weiteren die Aufgabe zugrunde, ein Kraftfahrzeug, dessen Räder über Radaufhängungen karosserieseitig angelenkt sind, derart weiterzubilden, dass eine weniger hoher bzw. flacherer Verlauf der Motorhauben ermöglicht ist.

Diese Aufgabe wird dadurch gelöst, dass die Radaufhängungen der Vorderräder nach einem der Ansprüche 1 bis 9 ausgebildet sind.

Sämtliche Ausführungen zu der erfindungsgemäßen Radaufhängung lassen sich analog auf das erfindungsgemäße Kraftfahrzeug übertragen, sodass mit diesem auch die zuvor genannten Vorteile erzielt werden.

Weitere Vorteile und Anwendungsmöglichkeiten der Erfindung ergeben sich aus der nachfolgenden Beschreibung in Verbindung mit dem in der Zeichnung dargestellten Ausführungsbeispiel.

In der Zeichnung bedeutet:
- Fig. 1: eine erfindungsgemäße Radaufhängung für ein Vorderrad eines Kraftfahrzeugs in Konstruktionslage in einer Ansicht von hinten;
- Fig. 2: die Radaufhängung aus Fig. 1 im voll eingefederten Zustand;
- Fig. 3: ein vergrößerten Detail der Radaufhängung aus Fig. 1 und Fig. 2 in einer Schnittdarstellung.

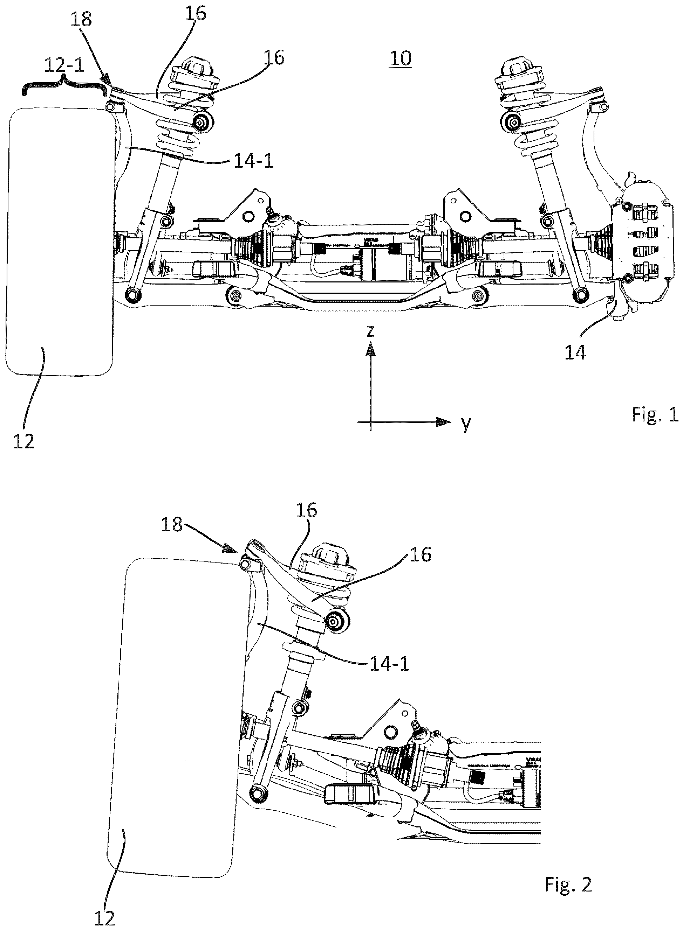

Fig. 1 und Fig. 2 zeigen eine insgesamt mit der Bezugsziffer 10 bezeichnete erfindungsgemäße Radaufhängung für ein Rad 12 eines Kraftfahrzeugs. Während Fig. 1 die Radaufhängung 10 in Konstruktionslage des Kraftfahrzeugs, also in einem definierten, leicht eingefederten Zustand, zeigt, ist in Fig. 2 die Radaufhängung 10 im voll eingefederten Zustand dargestellt.

Wie Fig. 1 und Fig. 2 weiter zeigen, umfasst die Radaufhängung 10 ein das Rad 12 tragendes Schwenklager 14, welches in der oberen Lenkerebene über zwei Lenker 16 karosserieseitig angelenkt ist. Auf eine Beschreibung der Lagerung des Schwenklagers 14 in der unteren Lenkerebene wird vorliegend verzichtet, da diese für das Verständnis der Erfindung nicht erforderlich ist.

Wie Fig. 1 und Fig. 2 weiter zu entnehmen ist, weist das Schwenklager 14 einen schwanenhalsförmigen Schwenklagerarm 14-1 auf, der sich in Fahrzeughochrichtung z über das Rad 12 erstreckt und der - wie Fig. 1 zeigt - in Konstruktionslage sich in Fahrzeugquerrichtung y nach außen, bis an die Lauffläche 12-1 des Rades 12 erstreckt.

Vorliegend sind die Lenker 16 jeweils über ein insgesamt mit der Bezugsziffer 18 bezeichnetes Kugelgelenk am schwanenhalsförmig ausgebildeten Schwenklagerarm 14-1 des Schwenklagers 14 gelagert.

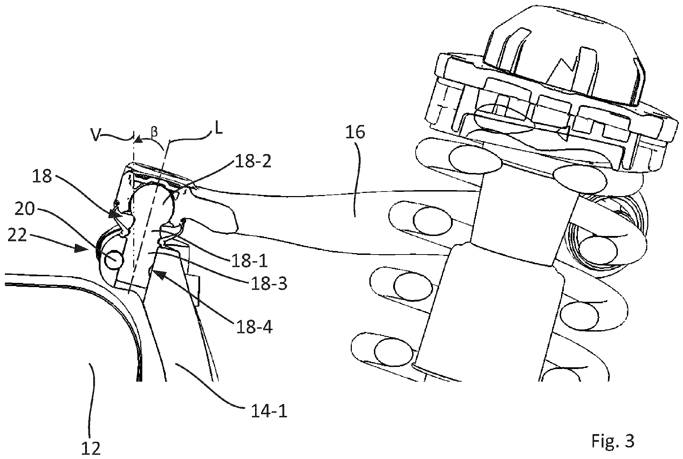

Hierzu umfasst das Kugelgelenk 18, wie insbesondere aus Fig. 3 ersichtlich, im Wesentlichen einen Kugelzapfen 18-1, dessen Kugeln 18-2 jeweils in entsprechend ausgebildeten lenkerseitigen Aufnahmen der Lenker 16 gelenkig aufgenommen sind, und dessen Schäfte 18-3 jeweils in schwenklagerarmseitigen, längsgeschlitzten Klemmbohrungen aufgenommen und mittels einer Klemmschraube 20 verklemmt in der Klemmbohrung gehalten sind. Vorliegend ist nur eine Klemmschraube 20 vorgesehen, die - aus Fig. 3 ersichtlich - orthogonal zur Längsrichtung L der Klemmbohrung und orthogonal zu den Schlitzen 22 der Klemmbohrung verlaufend ausgerichtet ist.

Die erfindungsgemäße Radaufhängung zeichnet sich dadurch aus, dass, wie insbesondere aus Fig. 3 ersichtlich, die Klemmbohrung in Fahrzeugquerrichtung y nach innen zur Fahrzeugmitte hin geneigt verlaufend ausgerichtet ist, sodass der in der Klemmbohrung aufgenommen Kugelzapfen 18-1 - ausgehend von der mit dem Bezugszeichen V bezeichneten Vertikalrichtung - um einen spitzen Winkel β, vorliegend um β = 15°, nach innen geneigt ausgerichtet ist.

Hierdurch erfährt die Kugel 18-2 des Kugelzapfens 18-1 neben einer Verschiebung in Fahrzeugquerrichtung y nach innen, insbesondere auch eine Verschiebung in Fahrzeughochrichtung z nach unten, sodass die Radaufhängung 10 weniger hoch baut.

Um einen verliersicheren Halt des Kugelzapfens 18-1 in der Klemmbohrung zu gewährleisten, weist, wie aus Fig. 3 ersichtlich, der Schaft 18-3 des Kugelzapfens 18-1 eine umlaufende Nut 18-4 auf und die die Klemmschraube 20 aufnehmende Klemmschraubenbohrung ist derart tangential zur Klemmbohrung verlaufend ausgerichtet, dass die Klemmschraube 20 bereichsweise in die am Schaft 18-3 des Kugelzapfens 18-1 ausgebildete Nut 18-4 hineinrechend und damit in Formschluss mit dem Kugelzapfen 18-1 steht.

## Patentansprüche

1. Radaufhängung (10) für ein Rad (12) einer Achse eines Kraftfahrzeugs, umfassend ein das Rad (12) tragendes Schwenklager (14), das in einer oberen Lenkerebene über zumindest einen Lenker (16) am Kraftfahrzeugaufbau angelenkt ist, wobei das Schwenklager (14) einen Schwenklagerarm (14-1) umfasst, an dem der Lenker (16) mittels eines einen Kugelzapfen (18-1) aufweisenden Kugelgelenks (18) gelagert ist, wobei der Kugelzapfen (18-1) in Fahrzeughochrichtung (z) verlaufend ausgerichtet ist und die Kugel (18-2) des Kugelzapfens (18-1) in einer lenkerseitigen Aufnahme und der Schaft (18-3) des Kugelzapfens (18-1) in einer schwenklagerarmseitigen Aufnahme aufgenommen ist, wobei die schwenklagerarmseitige Aufnahme als eine längsgeschlitzte Klemmbohrung ausgebildet ist, in der der Schaft (18-3) des Kugelzapfens (18-1) mittels einer orthogonal zur Längsachse (L) der Klemmbohrung ausgerichteten Klemmschraube (20) verklemmt gehalten ist,
**dadurch gekennzeichnet, dass**
die Klemmbohrung in Fahrzeugquerrichtung (y) nach innen zur Fahrzeugmitte hin geneigt verlaufend angeordnet ist, sodass der in der Klemmbohrung aufgenommene Kugelzapfen (18-1) - ausgehend von der Vertikalrichtung (V) - um einen spitzen Winkel (β) nach innen geneigt vorlaufend ausgerichtet ist.

2. Radaufhängung (10) nach Anspruch 1,
**dadurch gekennzeichnet, dass**
die Klemmbohrung so verlaufend angeordnet ist, dass für den spitzen Winkel (β) gilt: 10°≤ Winkel (β) ≤ 20°.

3. Radaufhängung (10) nach Anspruch 1 oder 2,
**dadurch gekennzeichnet, dass**
der Schwenklagerarm (14-1) in Fahrzeughochrichtung (z) betrachtet sich nach oben über das Rad (12) erstreckend und - in Konstruktionslage des Kraftfahrzeugs - in Fahrzeugquerrichtung (y) betrachtet sich bis an die Lauffläche des Rades (12-1) erstreckend ausgebildet ist, wobei das Kugelgelenk (18) oberhalb des Rades (12) liegend angeordnet ist und so positioniert und ausgebildet ist, dass in Konstruktionslage des Kraftfahrzeugs, die Kugel (18-2) des Kugelzapfens (18-1) - wenn in Projektion auf die Fahrbahn betrachtet - außerhalb der Lauffläche (12-1) des Rades (12) liegt.

4. Radaufhängung (10) nach Anspruch 3
**dadurch gekennzeichnet, dass**
der Schwenklagerarm (14-1) des Schwenklagers (14) schwanenhalsförmig ausgebildet.

5. Radaufhängung (10) nach Anspruch 1
**dadurch gekennzeichnet, dass**
der Schaft (18-3) des Kugelzapfens (18-1) eine umlaufende Nut (18-4) aufweist und dass die die Klemmschraube (20) aufnehmende Klemmschraubenbohrung derart tangential zur Klemmbohrung verlaufend ausgerichtet ist, dass die Klemmschraube (20) bereichsweise in die am Schaft (18-3) des Kugelzapfens (18-1) ausgebildete Nut (18-4) hineinrecht.

6. Radaufhängung (10) nach einem der vorgenannten Ansprüche,
**dadurch gekennzeichnet, dass**
ein Federbein der Radaufhängung (10) windschief zur Drehachse des Rades (12) angeordnet ist.

7. Radaufhängung (10) nach Anspruch 1,
**dadurch gekennzeichnet, dass**
das Schwenklager (14) in der oberen Lenkerebene über einen, als Dreieckslenker ausgebildeten Lenker am Kraftfahrzeugaufbau angelenkt ist.

8. Radaufhängung (10) nach Anspruch 1,
**dadurch gekennzeichnet, dass**
das Schwenklager (14) in der oberen Lenkerebene über zwei stabförmige Querlenker (16) am Kraftfahrzeugaufbau angelenkt ist, die jeweils über ein Kugelgelenk (18) am Schwenklagerarm (14-1) gelagert sind, wobei die Kugel (18-2) der Kugelzapfen (18-1) jeweils in lenkerseitigen Aufnahmen und die Schäfte (18-3) der Kugelzapfen (18-1) jeweils in schwenklagerarmseitigen Klemmbohrungen aufgenommen sind, wobei die Schäfte (18-3) über zwei fluchtend ausgerichtete Klemmschrauben (20) verklemmt in den schwenklagerarmseitigen Klemmbohrungen gehalten sind.

9. Radaufhängung (10) nach Anspruch 1
**dadurch gekennzeichnet, dass**
das Schwenklager (14) in der oberen Lenkerebene über zwei stabförmige Querlenker (16) am Kraftfahrzeugaufbau angelenkt ist, die jeweils über ein Kugelgelenk (18) am Schwenklagerarm (14-1) gelagert sind, wobei die Kugel (18-2) der Kugelzapfen (18-1) jeweils in lenkerseitigen Aufnahmen und die Schäfte (18-3) der Kugelzapfen (18-1) jeweils in schwenklagerarmseitigen Klemmbohrungen aufgenommen sind, wobei die Schäfte (18-3) über eine gemeinsame Klemmschraube (20) verklemmt in den schwenklagerarmseitigen Klemmbohrungen gehalten sind.

10. Kraftfahrzeug, dessen Räder über Radaufhängungen karosserieseitig angelenkt sind,
**dadurch gekennzeichnet, dass**
die Radaufhängungen (10) der Vorderräder nach einem der Ansprüche 1 bis 9 ausgebildet sind.
